# EUROPÄISCHE PATENTSCHRIFT

(11) **EP 3 655 286 B1**
(45) Veröffentlichungstag und Bekanntmachung des Hinweises auf die Patenterteilung: **12.01.2022**
(21) Anmeldenummer: 18742475.9
(22) Anmeldetag: 17.07.2018
(51) Int. Cl.: B60N 2/22, B60N 2/64, B60N 2/70

(54) **RÜCKENLEHNENTEIL EINES FAHRZEUGSITZES MIT EINER LEHNENKOPFVERSTELLEINRICHTUNG**
BACKREST PART OF A VEHICLE SEAT WITH AN ADJUSTMENT DEVICE OF AN UPPER BACKREST REGION
PARTIE DE DOSSIER D'UN SIÈGE DE VÉHICULE AVEC DISPOSITIF DE RÉGLAGE D'UNE PARTIE HAUTE DU DOSSIER

(30) Priorität: 18.07.2017 DE 102017212287
(43) Veröffentlichungstag der Anmeldung: 27.05.2020
(73) Patentinhaber: Volkswagen Aktiengesellschaft, 38440 Wolfsburg (DE)
(72) Erfinder: ENGELMANN, Oliver, 38165 Lehre (DE); ZIMMERMANN, Björn, 38527 Meine (DE); BRÜCKNER, Tim, 38126 Braunschweig (DE); RATHMANN, Sven, 38108 Braunschweig (DE)
(86) Internationale Anmeldenummer: PCT/EP2018/069345
(87) Internationale Veröffentlichungsnummer: WO 2019/016182

(56) Entgegenhaltungen:
- WO-A1-2008/092556
- DE-A1-102012 015 344
- DE-A1-102015 116 465
- JP-A- H0 672 201
- JP-A- H0 690 836
- US-A1- 2014 203 603

## Beschreibung

Die Erfindung betrifft ein Rückenlehnenteil für einen Fahrzeugsitz mit einem Lehnenrahmen in dem eine Lehnenkopfverstelleinrichtung angeordnet ist.

Die Druckschrift DE 11 2011 102 400 T5 offenbart einen Fahrzeugsitz, der eine effektive Verringerung eines Stoßes auf den Körper, den Halswirbelbereich eines Insassen bei einem Hinterendaufprall ermöglicht. Der Fahrzeugsitz umfasst einen Sitzlehnenrahmen, der Seitenrahmen beinhaltet, die an Seiten hiervon befindlich sind, ein Druckaufnahmeelement, das mit dem Sitzlehnenrahmen über Kopplungselemente gekoppelt ist, um einen Insassen zu stützen, und ein Stoßverringerungselement, das an wenigstens einem der Seitenrahmen angeordnet und mit den Kopplungselementen gekoppelt ist. Es wird bewirkt, dass sich das Druckaufnahmeelement in einem vorbestimmten Ausmaß einer auf das Druckaufnahmeelement wirkenden Stoßbelastung nach hinten bewegt, wobei der Sitzlehnenrahmen ein Lendenzonensinkverhinderungselement beinhaltet, das eine Bewegung derart, dass eine Lendenzone des Insassen nach hinten sinkt, verhindert.

Die Druckschrift DE 100 22 441 A1 beschreibt eine Rückenlehne für einen Fahrzeugsitz, mit einem Lehnenrahmen und einer Kopfstütze, die ein Kopfpolster und einen das Kopfpolster tragenden Polsterträger aufweist, sowie mit einer bei Heckcrash aktivierbaren Einrichtung zur Vorverlagerung der Kopfstütze. Die Einrichtung zur Vorverlagerung der Kopfstütze bei einem Heckcrash weist eine um mindestens eine quer verlaufende Schwenkachse schwenkbare Halterung mit einem Aufprallglied auf. Die Halterung dient der höhenverstellbaren Aufnahme des Polsterträgers. Das Aufprallglied ist innerhalb des Lehnenrahmens derart angeordnet, dass es bei einem Heckcrash durch den Körper eines Sitzbenutzers eine nach hinten in die Tiefe der Rückenlehne gerichtete Verschwenkung erfährt und dadurch die Halterung nach vorn schwenkt, wodurch das Kopfpolster an den Kopf des Sitzbenutzers herangeführt wird.

Weiterhin wird auf die Druckschriften DE 10 2013 015 529 A1, WO 2008/092556 A1 und DE 10 2012 015 344 A1 verwiesen, die jeweils einen neigungsverstellbaren Lehnenkopf offenbaren.

Als Stand der Technik, von der die Erfindung ausgeht, werden ferner noch die Druckschriften DE 10 2015 116 465 A1, US 2014/203603 A1, WO 2008/092556 A1, DE 10 2012 015 344 A1, JP H06 72201 A sowie JP H06 90836 A genannt.

Der Erfindung liegt die Aufgabe zugrunde eine Verstelleinrichtung zu schaffen, mittels der eine Anpassung der Struktur des Fahrzeugsitzes an den Körper einer auf dem Fahrzeugsitz aufsitzenden Person möglich ist.

Ausgangspunkt der Erfindung ist ein Rückenlehnenteil für einen Fahrzeugsitz mit einem Lehnenrahmen in dem eine Lehnenkopfverstelleinrichtung angeordnet ist, die eine stufenlose Verstellung im oberen Bereich des Rückenlehnenteiles ermöglicht. Es ist vorgesehen, dass die Lehnenkopfverstelleinrichtung mindestens ein im Lehnenrahmen beweglich gelagertes Flächenelement und mindestens ein in das mindestens eine Flächenelement integriertes elastisches Aufprallelement umfasst, die gemeinsam gegenüber einem Kopfteil des Lehnenrahmens entgegen und in Fahrtrichtung verstellbar angeordnet sind.

Ferner ist vorgesehen, dass die beweglich gelagerten Flächenelemente bezüglich einer vertikalen Längsmittelachse des Rückenlehnenteiles axialsymmetrisch links und rechts der Längsmittelachse angeordnet sind.

Erfindungsgemäß ist vorgesehen, dass das elastische Aufprallelement als Drahtmatte ausgebildet ist, die zwischen den zwei beweglichen Flächenelementen integriert angeordnet ist, wobei die beweglichen Flächenelemente über Schwingen mit einem Verbindungselement verbunden sind, das in einer zu der Drahtmatte in der Aufprallelementebene parallelen Verbindungselementebene zwischen Kopfteil und Aufprallelement angeordnet ist, wobei eine horizontale Rückversetzung des Verbindungselementes in +x-Richtung gegenüber den Flächenelementen mithilfe der Schwingen in die parallele Verbindungselementebene ausgebildet ist, wobei die Verstellung entgegen und in einer Fahrtrichtung (+/-x-Richtung) mechanisch oder elektromechanisch oder pneumatisch durch mindestens einen der Lehnenkopfverstelleinrichtung zugeordneten Versteller erfolgt, der an dem mindestens einen beweglichen Flächenelement und/oder dem Verbindungselement angreift, wobei die zwei beweglichen Flächenelemente im Lehnenrahmen derart in Lagerstellen gelagert sind, so dass eine translatorische Bewegung der zwei beweglichen Flächenelemente und der Drahtmatte entgegen und in einer Fahrtrichtung bewirkbar ist.

Insbesondere ist vorgesehen, dass jedes bewegliche Flächenelement eine Anlagefläche bildet, die durch die stufenlose Verstellung jedes beweglichen Flächenelementes in Fahrtrichtung an einen Schulterbereich einer Rückenfläche einer Rückenpartie einer aufsitzenden Person heranführbar ist.

Zudem ist insbesondere vorgesehen, dass die Drahtmatte eine Anlagefläche bildet, die durch die stufenlose Verstellung der zwei beweglichen Flächenelemente in Fahrtrichtung an einen Nacken und eine obere Rückenfläche einer Rückenpartie einer aufsitzenden Person heranführbar ist.

Es ist vorgesehen, dass das elastische Aufprallelement als die eine Aufprallelementebene bildende flächig ausgebildete Drahtmatte ausgebildet ist, die bevorzugt durch mehrere mäanderförmige Drähte ausgebildet ist, die in vorteilhafter Weise eine gewünschte Elastizität aufweisen.

Die Erfindung wird nachfolgend anhand eines nicht zur beanspruchten Erfindung gehörenden Ausführungsbeispiels mit Hilfe der zugehörigen Zeichnungen erläutert. Es zeigen:
- Figur 1: perspektivische Vorderansicht einer Lehnenkopfverstelleinrichtung im Lehnenrahmen eines Rückenlehnenteiles;
- Figur 2: perspektivische Ansicht schräg von oben auf die Lehnenkopfverstelleinrichtung im Lehnenrahmen des Rückenlehnenteiles;
- Figur 3: perspektivische Ansicht von oben auf den Lehnenrahmen und die Lehnenkopfverstelleinrichtung des Rückenlehnenteiles;
- Figur 4: perspektivische Ansicht schräg von oben auf den Lehnenrahmen und die Lehnenkopfverstelleinrichtung des Rückenlehnenteiles.

Für die Zwecke der Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

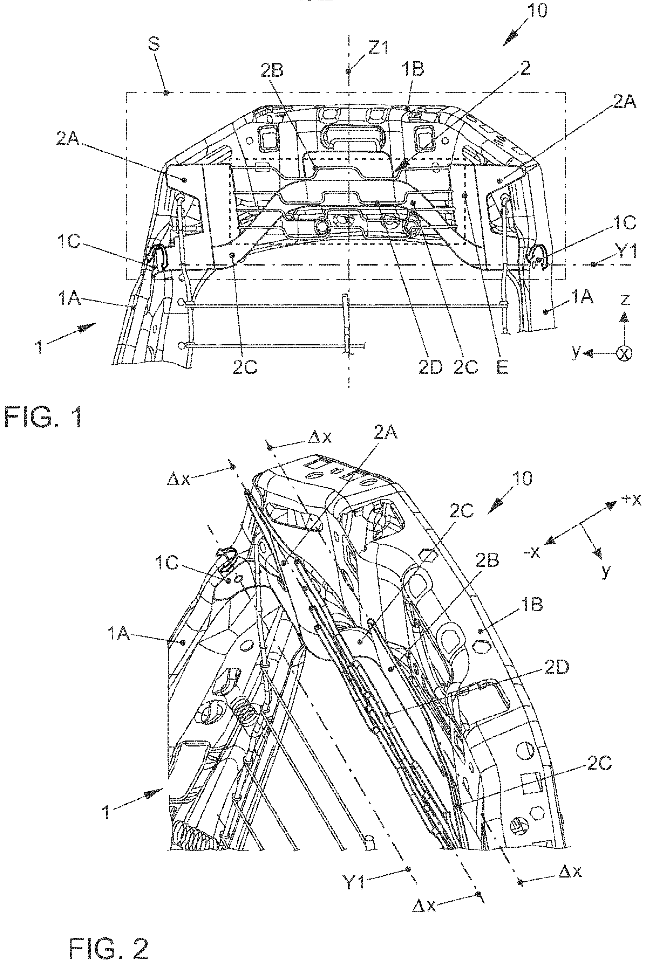

Die Figuren 1 und 2 zeigen in einer Zusammenschau in einer perspektivischen Vorderansicht und in einer perspektivischen Ansicht schräg von oben ein Rückenlehnenteil 10 eines nicht näher dargestellten Fahrzeugsitzes.

In bekannter Weise umfasst das Rückenlehnenteil 10 Seitenholme 1A und ein Kopfteil 1B, insbesondere ein Kopfblechteil, die gemeinsam den oberen Teil eines Lehnenrahmens 1 bilden.

Im Kopfblechteil 1B ist eine nicht näher dargestellte Kopfstütze angeordnet, die regelmäßig zumindest in und entgegen der Fahrtrichtung x um Δx verstellbar ist.

Ein Kopfstützenspiegel bildet dabei die Anlagefläche für die Rückseite des Kopfes der auf dem Fahrzeugsitz aufsitzenden Person.

Bei normaler Sitzhaltung der aufsitzenden Person liegt bei derzeitigen Fahrzeugsitzen zwischen einem Kopfblechspiegel S und der oberen Rückenlehnenfläche der auf dem Fahrzeugsitz aufsitzenden Person ein Abstand vor, der bei den herkömmlichen Fahrzeugsitzen nicht verändert werden kann.

Der Kopfblechspiegel S wird als oberer Bereich des Rückenlehnenspiegels definiert, der durch den auf dem Lehnenrahmen 1 angeordneten Schaum gebildet wird, der sich bei normaler Sitzposition außerhalb der Anlehnfläche der Rückenlehnenfläche der aufsitzenden Person liegt, so dass sich bei in Ausgangsposition befindlicher unverstellter Lehnenkopfverstelleinrichtung 2 und normaler Sitzposition der aufsitzenden Person ein Abstand zwischen dem Schulterbereich und dem oberen Rückenbereich der Person und dem Kopfblechspiegel bildet.

Zur Verdeutlichung ist der Kopfblechspiegel S in Figur 1 mit einem strichpunktierten Rahmen versehen.

Erfindungsgemäß ist im Bereich des Kopfblechspiegels S eine Lehnenkopfverstelleinrichtung 2 ausgebildet.

Die Lehnenkopfverstelleinrichtung 2 wird innerhalb des Schaumes des Rückenlehnenteiles 10 angeordnet. Dabei ist der Schaum des Rückenlehnenteiles 10 derart auf der dem Aufsitzenden zugewandten Seite ausgebildet, dass sich der auf der Lehnenkopfverstelleinrichtung 2 angeordnete Schaum gegenüber dem angrenzenden Schaum bewegen lässt. Dabei kann vorgesehen sein, dass das Schaumteil des Rückenlehnenteiles 10 mehrteilig ist oder das Schaumteil der Lehnenkopfverstelleinrichtung 2 des Rückenlehnenteiles 10 gegenüber dem angrenzenden Schaum in geeigneter Weise beweglich angeordnet ist.

In einer Ausgangsposition liegt der durch den Schaum des Rückenlehnenteiles gebildete Kopfblechspiegel S der Lehnenkopfverstelleinrichtung 2 beispielsweise in der y/z-Kopfstützenebene (vergleiche Figur 1) des nicht näher dargestellten Kopfstützenspiegels.

Erfindungsgemäß ist eine Lehnenkopfverstelleinrichtung 2 vorgesehen, die eine reversible Verstellung des Kopfblechspiegels S gegenüber dem Kopfstützenspiegel in +/-x Richtung = Δx ermöglicht.

In vorteilhafter Weise kann dadurch die Positionierung des oberen Rückenbereiches der aufsitzenden Person und die Positionierung des Kopfes der aufsitzenden Person mithilfe der Lehnenkopfverstelleinrichtung 2 vorgenommen werden.

Die Positionierung des Kopfes der aufsitzenden Person kann auch mit Hilfe der Kopfstützenverstelleinrichtung in +/-x Richtung = Δx vorgenommen werden.

Erfindungsgemäß besteht die Möglichkeit, dass bei Ausgestaltung der Lehnenkopfverstelleinrichtung 2 auf die Kopfstützenverstelleinrichtung verzichtet werden kann.

Durch die Lehnenkopfverstelleinrichtung 2 ist es zusammenfassend in vorteilhafter Weise möglich, den Kopfblechspiegel S gegenüber dem Kopfstützenspiegel um Δx reversibel stufenlos zu verstellen.

Durch Verstellung der Lehnenkopfverstelleinrichtung 2 wird der bisher vorhandene Abstand zwischen dem Schulterbereich und dem oberen Rückenbereich der aufsitzenden Person zur zu dem mit Schaum versehenen Kopfblechspiegel S verringert oder aufgehoben, sobald eine Verstellung der Lehnenkopfverstelleinrichtung 2 in -x-Richtung (vergleiche Figur 2) vorgenommen wird, wie nachfolgend noch weiter erläutert wird.

Die insgesamt mit dem Bezugszeichen 2 dargestellte Lehnenkopfverstelleinrichtung umfasst mindestens ein, im Ausführungsbeispiel zwei - nicht elastische - bewegliche Flächenelemente 2A, das oder die beweglich in den Seitenholmen 1A gelagert ist/sind.

Das oder die Elemente werden als "Flächen"element/e bezeichnet, da es/sie innerhalb der Lehnenkopfverstelleinrichtung 2 mindestens eine Anlehnfläche für eine die Schulterflächen umfassende Rückenfläche einer aufsitzenden Person bildet/bilden, wie in der Beschreibung noch verdeutlicht wird.

Bei Ausbildung eines einzigen Flächenelementes im Bereich des Kopfblechspiegels S kann, wie bereits erwähnt, der Abstand des Schulterbereichs und des oberen Rückenlehnenbereichs der in einer Normalposition aufsitzenden Person zu dem Flächenelement verringert oder aufgehoben werden, sobald eine Verstellung des zwei Flächenelementes in -x-Richtung vorgenommen wird.

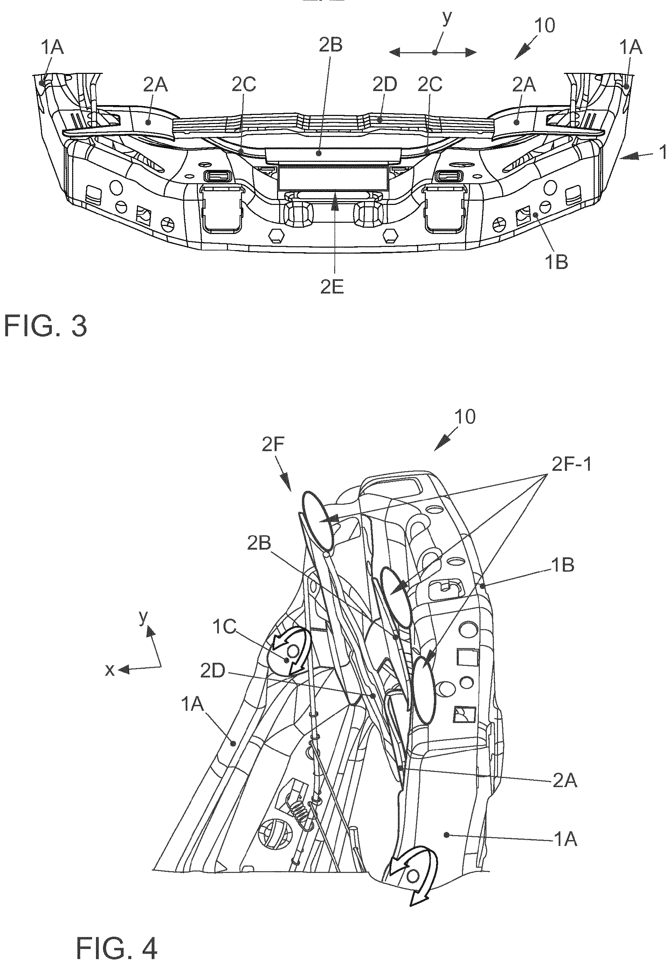

Bei Ausbildung der in den Figuren 1 und 2 sowie den nachfolgenden Figuren 3 und 4 dargestellten seitlichen zwei Flächenelemente 2A wird, wie bereits erläutert, der Abstand des Schulterbereichs und des oberen Rückenlehnenbereichs der in der Normalposition aufsitzenden Person zu den zwei Flächenelementen 2A verringert oder aufgehoben, sobald eine Verstellung der zwei Flächenelemente 2A in -x-Richtung vorgenommen wird.

Die seitlichen zwei Flächenelemente 2A sind bezüglich der vertikalen Längsmittelachse Z1 des Rückenlehnenteiles 10 axialsymmetrisch links und rechts der Längsmittelachse Z1 angeordnet, wobei die Flächenelemente 2A in Lagerstellen 1C in je einem Seitenholm 1A beweglich gelagert sind.

Die Flächenelement/e 2A sind in der erfindungsgemäßen aber nicht dargestellten Ausführungsvariante derart in den Lagerstellen 1C gelagert, dass sie sozusagen translatorisch in +-x-Richtung verlagerbar sind.

In der in den Figuren dargestellten aber nicht beanspruchten Ausführungsvariante ist vorgesehen, dass das oder die Flächenelement/e 2A um eine horizontale Schwenkachse Y1 (vergleiche die Doppelpfeile in den Figuren 1 und 3) verlagerbar ist/sind, mithin reversibel drehbar in den Lagerstellen 1C gelagert.

Dabei ist vorgesehen, dass die horizontale Schwenkachse Y1 am unteren Rand des oder der Flächenelemente 2A angeordnet ist, so dass die Lehnenkopfverstelleinrichtung 2 eine Schwenkbewegung ausübt, bei der das oder die Flächenelement/e 2A bei der Drehbewegung der Lehnenkopfverstelleinrichtung 2 im oberen Bereich gegenüber einem unteren Bereich eine größere Verstellbewegung in +/-x-Richtung bewirkt. Dadurch wird in vorteilhafter Weise bei der in den Figuren dargestellten Ausführungsvariante eine ergonomisch bessere Anpassung des Kopfblechspiegels S an den Schulterbereich beziehungsweise den oberen Rückenbereich der aufsitzenden Person bewirkt. Im Ausführungsbeispiel sind die Flächenelemente 2A als Blechformteile ausgebildet. Die beiden in der dargestellten Ausführungsvariante angeordneten Flächenelemente 2A sind bevorzugt über ein außerhalb der y/z-Flächenelementebene liegendes Verbindungselement 2B miteinander verbunden.

Das Verbindungselement 2B liegt somit in x-Richtung gesehen zwischen der y/z-Flächenelement- und Aufprallelementebene des durch die Flächenelemente 2A und einem Aufprallelement 2D und dem Kopfblechteil 1B des Lehnenrahmens 1 vorgesehenen Bauraum. Das Verbindungselement 2B ist bevorzugt ebenfalls als flächiges Blechformteil ausgebildet. Das Verbindungselement 2B ist im Ausführungsbeispiel über zwei Schwingen 2C, die den horizontalen Abstand in x-Richtung zwischen dem Verbindungselement 2B und den Flächenelementen 2A überwinden, mit den Flächenelementen 2A fest verbunden. Mit anderen Worten, eine Bewegung des Verbindungselementes 2B wird auf die Flächenelemente 2A übertragen und umgekehrt, worauf noch eingegangen wird. Die Schwingen 2C sind ebenfalls als Blechformteile ausgebildet.

Durch die horizontale Rückversetzung des Verbindungselementes 2B in +x-Richtung gegenüber den Flächenelementen 2A (vergleiche insbesondere die Figuren 1 und 2) mithilfe der Schwingen 2C ist es erfindungsgemäß möglich, dass zwischen den beiden Flächenelementen 2A als Aufprallelement 2D eine Drahtmatte angeordnet ist, deren Drähte bevorzugt in einer Mäanderform ausgebildet sind.

Das Aufprallelement 2D in der Art einer in einer Ebene (y/z- Aufprallelementebene) aufgespannten Drahtmatte stellt ebenfalls ein "Flächen"element dar, da es innerhalb der Lehnenkopfverstelleinrichtung 2 eine Anlehnfläche für eine zwischen den Schulterflächen liegende Rücken- und/oder Nackenfläche einer aufsitzenden Person bildet, wie in der Beschreibung noch verdeutlicht wird.

Die zwischen den Flächenelementen 2A angeordnete Drahtmatte 2D ist somit in der y/z-Flächenelementebene der Flächenelemente 2A (wie am Besten in Figur 1 deutlich wird) angeordnet und bildet die y/z-Aufprallebene, die in der gleichen Ebene liegen.

In einem Crashfall, insbesondere im Heckcrashfall oder bei einem Rebound des Insassen auch im Frontcrashfall wird dadurch, dass die Flächenelemente 2A über die Drahtmatte 2D miteinander verbunden sind, in die y/z- Aufprallelementebene hinein ein Eintauchbereich E für den oberen zwischen den Schultern liegenden Rückenbereich und den Nacken des aufsitzenden Insassen geschaffen, der in Figur 1 durch einen punktierten Rahmen dargestellt ist.

In vorteilhafter Weise kann der obere Rückenbereich und insbesondere der Nacken des Insassen durch diese Ausgestaltung der Lehnenkopfverstelleinrichtung 2 bei einem Unfall nach hinten in den Aufprallbereich E, insbesondere den Drahtmattenbereich eintauchen, wobei die Schultern des Insassen in vorteilhafter Weise gleichzeitig durch die Flächenelemente 2A abgestützt werden.

Diese Lehnenkopfverstellung mithilfe der Lehnenkopfverstelleinrichtung 2 bietet somit nicht nur einen Komfortvorteil durch die ergonomisch angenehmere Anpassung an die aufsitzende Person, sondern erhöht auch die Sicherheit für die aufsitzende Person, weil die Beschleunigungskräfte für den Oberkörper und den Kopf des Insassen durch das als Drahtmatte 2D ausgebildete Aufprallelement von der elastisch verformbaren Drahtmatte 2D aufgenommen werden, so dass sowohl der Oberkörper als auch der Kopf des Insassen abgebremst werden, wodurch insbesondere in vorteilhafter Weise der Whiplash-Effekt des durch die Nackenbewegung ansonsten ruckartig verlagerten Kopfes des Insassen gegenüber dem Oberkörper des Insassen verringert wird.

Erfindungsgemäß ist vorgesehen, dass die Lehnenkopfverstelleinrichtung 2 manuell oder elektromechanisch oder pneumatisch erfolgt.

Es versteht sich, dass sich hierfür eine Vielzahl von Ausführungsformen ausbilden lassen, wobei bevorzugte Ausführungsformen nachfolgend erläutert werden.

Nicht näher dargestellt ist eine erste Ausführungsform bei der vorgesehen ist, das mindestens ein Beschlag oder mindestens ein Hebel oder mindestens ein Drehrad am beziehungsweise im Lehnenrahmen montiert ist, der auf das oder die Flächenelement/e 2A und/oder das Verbindungselement 2B und/oder die Schwingen 2C zugreift, um die Lehnenkopfverstelleinrichtung 2, wie erläutert, in +/-x-Richtung zu verstellen.

In einer in Figur 3 (perspektivische Draufsicht auf den Lehnenrahmen 1) dargestellten weiteren Ausführungsform ist vorgesehen, einen elektromechanischen Versteller 2E auszubilden, der in einem Bauraum zwischen einer Rückseite des Verbindungselementes 2B und der Vorderseite des Kopfblechteils 1B angeordnet ist. Der Versteller 2E umfasst ein nicht näher dargestelltes Verstellglied, welches durch einen nicht näher dargestellten Elektromotor in +/-x-Richtung verstellbar ist, so dass das als Verbindungsplatte ausgebildete Verbindungselement 2B in +/-x-Richtung verlagerbar ist, da das Verstellglied mit der Verbindungsplatte verbunden ist.

In einer in Figur 4 (perspektivische Ansicht schräg von oben auf den Lehnenrahmen 1) dargestellten noch weiteren Ausführungsform ist vorgesehen, einen pneumatischen Versteller 2F auszubilden. Der pneumatische Versteller umfasst mindestens ein Pneumatikkissen 2F-1, welche/s bevorzugt zwischen dem oder den Flächenelement/en 2A und/oder dem als Verbindungsplatte ausgebildeten Verbindungselement 2B und dem Kopfblechteil 1B angeordnet ist/sind. Die Pneumatikkissen sind mit einem gasförmigen Medium, insbesondere Luft befüllbar und können entlüftet werden. Durch eine Befüllung mit Luft erfolgt eine Verstellung der Lehnenkopfverstelleinrichtung 2 in -x-Richtung (vergleiche Figur 2), wobei eine Entlüftung einer Rückverstellung in +x-Richtung ermöglicht, in dem Rückstellelement, insbesondere Rückstellfedern zwischen dem Verbindungselement 2B bzw. dem oder den Flächenelement/en 2A angeordnet sind, die eine Bewegung der Lehnenkopfverstelleinrichtung 2 in +x-Richtung bewirkt.

In vorteilhafter Weise muss bei der erfindungsgemäßen Lösung kein neues Kopfblechteil 1B konstruiert werden. Die Lehnenkopfverstelleinrichtung 2 kann mit anderen Worten in bereits vorhandene Lehnenrahmen 1 integriert werden.

### Bezugszeichenliste

- 10: Rückenlehnenteil
- 1: Lehnenrahmen
- 1A: Seitenholm
- 1B: Kopfteil
- 1C: Lagerstelle
- S: Kopfblechspiegel (Figur 1, strichpunktiert)
- 2: Lehnenkopfverstelleinrichtung
- 2A: Flächenelement
- 2B: Verbindungselement
- 2C: Schwingen
- 2D: Aufprallelement, Drahtmatte
- E: Aufprallbereich, Eintauchbereich innerhalb des Kopfblechspiegels S (Figur 1, punktiert)
- 2E: elektromechanischer Versteller
- 2F: pneumatischer Versteller
- 2F-1: Pneumatikkissen
- -x: Richtung in der übliche Fahrtrichtung eines Fahrzeugs
- +x: Richtung entgegen der üblichen Fahrtrichtung -x
- Δx: Verstellbereich der Lehnenkopfverstelleinrichtung 2
- y: Richtung in der Horizontalen quer zur x-Richtung
- Y1: horizontale Schwenkachse
- z: Richtung in der Vertikalen quer zur x-Richtung
- Z1: Längsmittelachse des Rückenlehnenteils 10

## Patentansprüche

1. Rückenlehnenteil (10) für einen Fahrzeugsitz mit einem Lehnenrahmen (1) in dem eine Lehnenkopfverstelleinrichtung (2) angeordnet ist, die eine stufenlose Verstellung im oberen Bereich des Rückenlehnenteiles (10) ermöglicht, wobei die Lehnenkopfverstelleinrichtung (2) mindestens ein im Lehnenrahmen (1) beweglich gelagertes Flächenelement (2A) und mindestens ein in das mindestens eine Flächenelement (2A) integriertes elastisches Aufprallelement (2D) umfasst, die gemeinsam gegenüber einem Kopfteil (1B) des Lehnenrahmens (1) entgegen und in einer Fahrtrichtung (+/-x-Richtung) verstellbar angeordnet sind, wobei
zwei beweglich gelagerte Flächenelemente (2A) bezüglich einer vertikalen Längsmittelachse (Z1) des Rückenlehnenteiles (10) axialsymmetrisch links und rechts der Längsmittelachse (Z1) angeordnet sind,
**dadurch gekennzeichnet, dass** das elastische Aufprallelement (2D) als Drahtmatte ausgebildet ist, die zwischen den zwei beweglichen Flächenelementen (2A) integriert angeordnet ist,
wobei die beweglichen Flächenelemente (2A) über Schwingen (2C) mit einem Verbindungselement (2B) verbunden sind, das in einer zu der Drahtmatte in der Aufprallelementebene parallelen Verbindungselementebene zwischen Kopfteil (1B) und Aufprallelement (2D) angeordnet ist, wobei eine horizontale Rückversetzung des Verbindungselementes (2B) in +x-Richtung gegenüber den Flächenelementen (2A) mithilfe der Schwingen (2C) in die parallele Verbindungselementebene ausgebildet ist, wobei die Verstellung entgegen und in einer Fahrtrichtung (+/-x-Richtung) mechanisch oder elektromechanisch oder pneumatisch durch mindestens einen der Lehnenkopfverstelleinrichtung (2) zugeordneten Versteller (2E, 2F) erfolgt, der an dem mindestens einen beweglichen Flächenelement (2A) und/oder dem Verbindungselement (2B) angreift, wobei die zwei beweglichen Flächenelemente (2A) im Lehnenrahmen (1) derart in Lagerstellen (1C) gelagert sind, so dass eine translatorische Bewegung der zwei beweglichen Flächenelemente (2A) und der Drahtmatte entgegen und in einer Fahrtrichtung (+/-x-Richtung) bewirkbar ist.

2. Rückenlehnenteil (10) nach Anspruch 1, **dadurch gekennzeichnet, dass** jedes bewegliche Flächenelement (2A) eine Anlagefläche bildet, die durch die stufenlose Verstellung jedes beweglichen Flächenelementes (2A) in Fahrtrichtung (-x-Richtung) an einen Schulterbereich einer Rückenfläche einer Rückenpartie einer aufsitzenden Person heranführbar ist.

3. Rückenlehnenteil (10) nach Anspruch 1, **dadurch gekennzeichnet, dass** die Drahtmatte eine Anlagefläche bildet, die durch die stufenlose Verstellung der zwei beweglichen Flächenelemente (2A) in Fahrtrichtung (-x-Richtung) an einen Nacken und eine obere Rückenfläche einer Rückenpartie einer aufsitzenden Person heranführbar ist.

4. Rückenlehnenteil (10) nach Anspruch 1, **dadurch gekennzeichnet, dass** die zwei beweglichen Flächenelemente (2A) und die Drahtmatte in einer gemeinsamen Flächenelement- und Aufprallelementebene angeordnet sind.

## Claims

1. Backrest part (10) for a vehicle seat having a backrest frame (1), in which there is arranged a backrest head adjustment device (2) which permits a continuous adjustment in the upper region of the backrest part (10), wherein the backrest head adjustment device (2) comprises at least one surface element (2A), which is mounted movably in the backrest frame (1), and at least one elastic impact element (2D), which is integrated in the at least one surface element (2A), said surface element and impact element being arranged to be jointly adjustable in relation to a head part (1B) of the backrest frame (1) counter to and in a direction of travel (+/- x direction), wherein two movably mounted surface elements (2A) are arranged axially symmetrically with respect to a vertical longitudinal centre axis (Z1) of the backrest part (10) on the left and on the right of the longitudinal centre axis (Z1), **characterized in that** the elastic impact element (2D) is designed as a wire mat which is arranged integrated between the two movable surface elements (2A), wherein the movable surface elements (2A) are connected via rocker arms (2C) to a connecting element (2B) which is arranged in a connecting element plane, which is parallel to the wire mat in the impact element plane, between the head part (1B) and the impact element (2D), wherein a horizontal setting back of the connecting element (2B) in the +x direction in relation to the surface elements (2A) into the parallel connecting element plane is formed by means of the rocker arms (2C), wherein the adjustment takes place counter to and in a direction of travel (+/- x direction) mechanically or electromechanically or pneumatically by means of at least one adjuster (2E, 2F) which is assigned to the backrest head adjustment device (2) and acts on the at least one movable surface element (2A) and/or on the connecting element (2B), wherein the two movable surface elements (2A) in the backrest frame (1) are mounted in bearings (1C) in such a manner that a translational movement of the two movable surface elements (2A) and of the wire mat counter to and in a direction of travel (+/- x direction) can be brought about.

2. Backrest part (10) according to Claim 1, **characterized in that** each movable surface element (2A) forms a contact surface which can be brought up to a shoulder region of a back area of a back portion of a seated person by the continuous adjustment of each movable surface element (2A) in the direction of travel (-x direction).

3. Backrest part (10) according to Claim 1, **characterized in that** the wire mat forms a contact surface which can be brought up to a neck and an upper back area of a back portion of a seated person by the continuous adjustment of the two movable surface elements (2A) in the direction of travel (-x direction).

4. Backrest part (10) according to Claim 1, **characterized in that** the two movable surface elements (2A) and the wire mat are arranged in a common surface element and impact element plane.

## Revendications

1. Pièce de dossier (10) pour un siège de véhicule, munie d'un cadre de dossier (1) dans lequel est agencé un dispositif de réglage de tête de dossier (2), qui permet un réglage continu dans la zone supérieure de la pièce de dossier (10), le dispositif de réglage de tête de dossier (2) comprenant au moins un élément plat (2A) monté de manière mobile dans le cadre de dossier (1) et au moins un élément d'impact élastique (2D) intégré dans l'au moins un élément plat (2A), qui sont agencés de manière à pouvoir être réglés conjointement par rapport à une pièce de tête (1B) du cadre de dossier (1) à l'encontre et dans une direction de marche (direction +/-x), deux éléments plats (2A) montés de manière mobile étant agencés, par rapport à un axe médian longitudinal vertical (Z1) de la pièce de dossier (10), à gauche et à droite de l'axe médian longitudinal (Z1) selon une symétrie axiale,
**caractérisé en ce que** l'élément d'impact élastique (2D) est configuré sous la forme d'un mat de fils métalliques, qui est agencé de manière intégrée entre les deux éléments plats mobiles (2A),
les éléments plats mobiles (2A) étant reliés par l'intermédiaire de bras oscillants (2C) à un élément de liaison (2B), qui est agencé entre la pièce de tête (1B) et l'élément d'impact (2D) dans un plan d'élément de liaison parallèle au mat de fils métalliques dans le plan d'élément d'impact, un retrait horizontal de l'élément de liaison (2B) dans la direction +x par rapport aux éléments plats (2A) étant formé à l'aide des bras oscillants (2C) dans le plan d'élément de liaison parallèle, le réglage à l'encontre et dans une direction de marche (direction +/-x) étant effectué mécaniquement ou électromécaniquement ou pneumatiquement par au moins un dispositif de réglage (2E, 2F) associé au dispositif de réglage de tête de dossier (2), qui agit sur l'au moins un élément plat mobile (2A) et/ou sur l'élément de liaison (2B), les deux éléments plats mobiles (2A) étant montés dans le cadre de dossier (1) à des emplacements de montage (1C), de telle sorte qu'un mouvement de translation des deux éléments plats mobiles (2A) et du mat de fils métalliques à l'encontre et dans une direction de marche (direction +/-x) peut être provoqué.

2. Pièce de dossier (10) selon la revendication 1, **caractérisée en ce que** chaque élément plat mobile (2A) forme une surface d'appui, qui peut être rapprochée d'une zone d'épaule d'une surface dorsale d'une partie dorsale d'une personne assise par le réglage continu de chaque élément plat mobile (2A) dans la direction de marche (direction -x).

3. Pièce de dossier (10) selon la revendication 1, **caractérisée en ce que** le mat de fils métalliques forme une surface d'appui, qui peut être rapprochée d'une nuque et d'une surface dorsale supérieure d'une partie dorsale d'une personne assise par le réglage continu des deux éléments plats mobiles (2A) dans la direction de marche (direction -x).

4. Pièce de dossier (10) selon la revendication 1, **caractérisée en ce que** les deux éléments plats mobiles (2A) et le mat de fils métalliques sont agencés dans un plan commun d'éléments plats et d'élément d'impact.
